# EUROPÄISCHE PATENTANMELDUNG

(11) **EP 1 262 345 A2**
(43) Veröffentlichungstag der Anmeldung: **04.12.2002**
(21) Anmeldenummer: 02010600.1
(22) Anmeldetag: 10.05.2002
(51) Int. Cl.: B60H 1/00, H05B 3/84

(54) **Anordnung zum Trocknen einer Fahrzeugscheibe**

(30) Priorität: 31.05.2001 DE 10126716
(71) Anmelder: SIEMENS AKTIENGESELLSCHAFT, 80333 München (DE)
(72) Erfinder: Heimberger, Hans-Dieter, 61440 Oberursel (DE); Mattmann, Erich, 55262 Heidesheim (DE)

(57) **Zusammenfassung**

Es wird eine Anordnung zum Trocknen einer einem Fahrzeuginnenraum zugewandten Seite einer Fahrzeugscheibe vorgeschlagen. Die Anordnung weist einen Feuchtesensor auf, der als Leiterbahnschicht ausgebildet ist und innig mit der Scheibe verbunden ist. Weiterhin ist ein Steuergerät vorgesehen, das mit dem Sensor verbunden ist und die Meßwerte des Sensors verarbeitet. Weiterhin enthält die Anordnung eine Einrichtung zur Verminderung der auf der den Fahrzeuginnenraum zugewandten Seite der Fahrzeugscheibe kondensierten Feuchtigkeit, wobei die Einrichtung von dem Steuergerät automatisch aktiviert wird, wenn die von dem Feuchtesensor gemessene Feuchtigkeit einen vorgegebenen Grenzwert überschreitet.

## Beschreibung

Die Erfindung betrifft eine Anordnung zum Trocknen der einem Fahrzeuginnenraum zugewandten Seite einer Fahrzeugscheibe sowie ein Verfahren zur Herstellung eines Feuchtesensors auf einer dem Innenraum eines Kraftfahrzeugs zuzuwendenden Seite einer Fahrzeugscheibe.

Insbesondere bei feuchter und kalter Witterung tritt beim Betrieb von Kraftfahrzeugen häufig das Problem auf, daß sowohl die Windschutzscheibe als auch die Heckscheibe beschlagen und damit den Blick des Fahrers einschränken. Das Beschlagen der Scheiben kann insbesondere auch innerhalb sehr kurzer Zeitabschnitte von beispielsweise nur wenigen Sekunden erfolgen. Erst wenn der Fahrer das Beschlagen der Scheiben registriert hat, kann er durch entsprechende Gegenmaßnahmen dem weiteren Beschlagen der Scheiben entgegenwirken. Hierzu kann beispielsweise der Luftstrom zur Fahrzeugbelüftung im wesentlichen zur Frontscheibe hinausgerichtet werden, die Luftmenge durch Erhöhung der Gebläsedrehzahl erhöht werden, die Heizung eingeschaltet werden oder auch eine vorhandene Klimaanlage aktiviert werden. Bis mit den vom Fahrer ergriffenen Maßnahmen das Abtrocknen der Scheibe einsetzt, kann jedoch ein Großteil der Scheibe soweit beschlagen sein, daß eine Gefährdung durch mangelhafte Sicht entsteht.

Aus der DE 36 24 170 A1 ist die Verwendung eines Feuchtesensors zur Detektierung der Beschlagsbildung auf der Scheibeninnenseite sowie die Einleitung von Gegenmaßnahmen bekannt. Hinsichtlich der Ausbildung eines geeigneten Feuchtesensors finden sich jedoch keine Hinweise. Aus der DE 196 02 354 C2 und der DE 195 24 943 A1 sind Anordnungen bekannt, die als Regensensoren auf der Außenseite einer Windschutzscheibe aufgebracht sind.

Aufgabe der Erfindung ist es, eine Anordnung zum Trocknen der Innenseite einer Fahrzeugscheibe anzugeben, die mit einem hierfür besonders geeigneten Feuchtesensor ausgerüstet ist und eine automatische Aktivierung einer Trocknungseinrichtung aufweist. Eine weitere Aufgabe der Erfindung ist es, ein Verfahren zur Herstellung eines geeigneten Feuchtesensors anzugeben.

Die erstgenannte Aufgabe wird gelöst durch eine Anordnung zum Trocknen der einem Fahrzeuginnenraum zugewandten Seite einer Fahrzeugscheibe, insbesondere einer Windschutzscheibe, mit einem auf der dem Innenraum zugewandten Seite der Fahrzeugscheibe angeordneten Feuchtesensor, der als Leiterbahnschicht ausgebildet ist und innig mit der Scheibe verbunden ist, einem Steuergerät, das mit dem Sensor verbunden ist und die Meßwerte des Sensors verarbeitet, sowie einer Einrichtung zur Verminderung der auf der dem Fahrzeuginnenraum zugewandten Seite der Fahrzeugscheibe kondensierenden Feuchtigkeit, wobei die Einrichtung von dem Steuergerät automatisch aktiviert wird, wenn die von dem Feuchtesensor gemessene Feuchtigkeit einen vorgegebenen Grenzwert überschreitet.

Mit der erfindungsgemäßen Anordnung ist es möglich, auf der Scheibeninnenseite kondensierende Feuchtigkeit bereits dann zu detektieren, wenn das menschliche Auge eine Trübung der Scheiben noch nicht wahrnimmt. Entsprechende Gegenmaßnahmen zur Verminderung der Feuchtigkeit auf der Scheibeninnenseite können daher frühzeitig ergriffen werden, so daß ein die Sicht des Fahrers behinderndes Beschlagen der Scheiben vermieden wird. Durch die automatische Aktivierung der Maßnahmen wird der Fahrer zudem nicht vom Verkehrsgeschehen abgelenkt. Zudem wird die Ergreifung falscher Maßnahmen zur Verminderung der Feuchtigkeit auf den Scheibeninnenseiten durch den Fahrer vermieden.

Vorzugsweise ist der Feuchtesensor in Schichttechnik, insbesondere in Dickschichttechnik auf die Innenseite der Fahrzeugscheibe aufgebracht. Hierdurch kann die geforderte innige Verbindung des Sensors mit der Fahrzeugscheibe sicher erreicht werden. Ein Ablösen des Sensors und damit einer Fehlfunktion der Anordnung wird hierbei verhindert.

Das Aufbringen der niederohmigen Leiterbahnen als Sensorelement kann in Schichttechnik entweder direkt durch Siebdruck oder indirekt mittels einer Abziehfolie erfolgen. Schon eine geringe Feuchtigkeit ändert den Leitwert bzw. den Widerstand der Sensor-Leiterbahn. Die nachgeschaltete Elektronik detektiert diese Änderung und aktiviert entsprechende Einrichtungen zur Trocknung.

Als Einrichtung zur Verminderung der Feuchtigkeit kann insbesondere eine Fahrzeugklimaanlage vorgesehen sein, die bei auftretender Scheibenfeuchtigkeit automatisch aktiviert wird. Durch die Klimaanlage wird die dem Fahrzeuginnenraum zugeführte Luft getrocknet, so daß auch ein Abtrocknen der Fahrzeugscheiben erreicht wird. Als weitere Einrichtung zur Verminderung der Feuchtigkeit kann das Fahrzeuggebläse vorgesehen werden, das bei detektierter Feuchtigkeit auf der Fahrzeugscheibe eingeschaltet bzw. auf eine höhere Leistungsstufe geschaltet wird. Bei einer weiteren Einrichtung zur Verminderung der Feuchtigkeit kann es sich um eine Scheibenheizung handeln. Diese ist insbesondere bei Heckscheiben in der Regel ohnehin vorhanden.

Ein erfindungsgemäßes Verfahren zur Herstellung eines Feuchtesensors auf einer dem Innenraum eines Kraftfahrzeugs zuzuwendenden Seite einer Fahrzeugscheibe ist dadurch gekennzeichnet, daß der Sensor als Leiterbahnschicht während eines Sinterprozesses der Scheibenglasherstellung auf das Scheibenglas aufgebracht wird. Bei dem Sinterprozeß kann es sich insbesondere um einen Biegeprozeß der Scheibe handeln.

Eine derart hergestellte Kraftfahrzeugscheibe weist somit einen auf der dem Innenraum eines Kraftfahrzeugs zugewandten Seite angeordneten Feuchtesensor auf, der als Leiterbahnschicht auf der dem Innenraum des Kraftfahrzeugs zugewandten Seite der Scheibe ausgebildet und innig mit der Scheibe verbunden ist.

Die Erfindung wird nachfolgend anhand von Ausführungsbeispielen und der Zeichnung näher erläutert. Es zeigen:
- Fig. 1:: eine Draufsicht auf einen Sensor;
- Fig. 2:: eine Draufsicht auf eine Sensoranordnung;
- Fig. 3:: eine Seitenansicht der Sensoranordnung nach Fig. 2;
- Fig. 4:: eine schematische Darstellung einer Kraftfahrzeugklimaanlage.

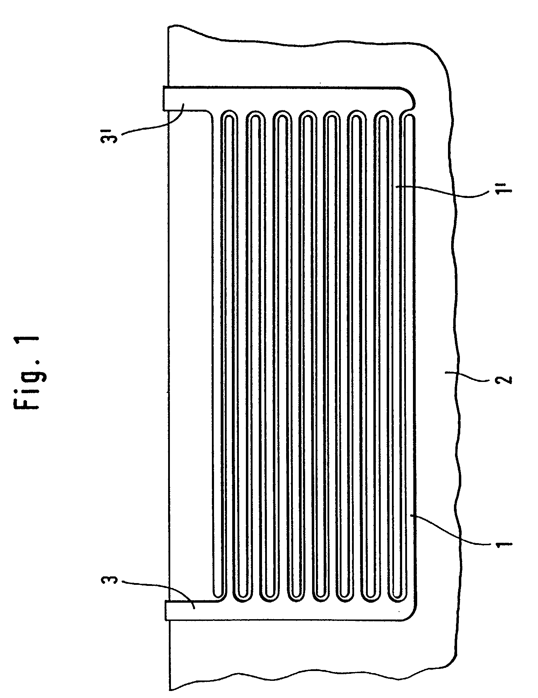

Der in Fig. 1 dargestellte Feuchtesensor besteht aus zwei elektrisch leitenden Widerstandsschichten 1 und 1', die kammartig ausgebildet sind und mit den Zinken ihrer Kämme derart ineinander greifen, daß nur Spalten geringer Breite zwischen den Zinken vorhanden sind. Die elektrischen Widerstandsschichten 1 und 1' sind auf der Innenseite einer Kraftfahrzeugscheibe, beispielsweise einer Windschutzscheibe, angebracht. Jede Widerstandsschicht 1 und 1' besitzt einen Anschlußkontakt 3 bzw. 3', an den die unterschiedlichen elektrischen Potentiale anschließbar sind. Durch kondensierende Feuchtigkeit werden die Spalten der Anordnung leitend überbrückt, so daß die Zinken leitend miteinander verbunden werden. Der dabei auftretende Übergangswiderstand ist von der Feuchtigkeitsmenge abhängig und kann über eine Meßanordnung erfaßt und ausgewertet werden.

Die Zinken der Widerstandsschichten 1 und 1' können eine Breite in der Größenordnung von beispielsweise 1 mm und die Spalten zwischen den Zinken eine Breite in der Größenordnung von 0,4 mm aufweisen.

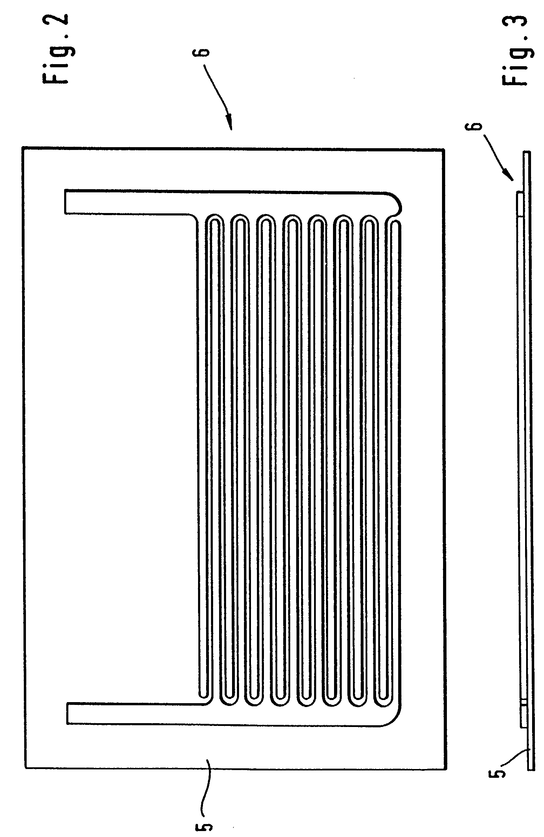

In den Figuren 2 und 3 ist eine Sensoranordnung 6 dargestellt, die separat von der Windschutzscheibe 2 hergestellt und anschließend auf die Windschutzscheibe 2 aufgebracht wird. Auf eine flexible Folie 5 aus einem Kunstharz ist durch Siebdrucktechnik im Muster der Widerstandsschichten 1 und 1' eine Leitpaste, die Platinteilchen und Glasfritte enthält, aufgebracht und in einem Trockenofen getrocknet worden.

Die vorgefertigte Folie 5 kann auf eine vorzugsweise ebene Fahrzeugscheibe aufgelegt werden. Dabei wird die Folie 5 auf die Seite der Fahrzeugscheibe aufgelegt, die später dem Innenraum des Kraftfahrzeuges zugewandt sein wird.

Durch Wärmebeaufschlagung der Windschutzscheibe 2 in einem Biegeofen mit etwa 600° C erfolgt gleichzeitig ein Aufsintern der Leitpaste auf die Windschutzscheibe 2, ein rückstandsloses Vergasen der flexiblen Folie 5 und eine Biegeverformung der Windschutzscheibe 2 aus ihrer ebenen in eine gewölbte Form.

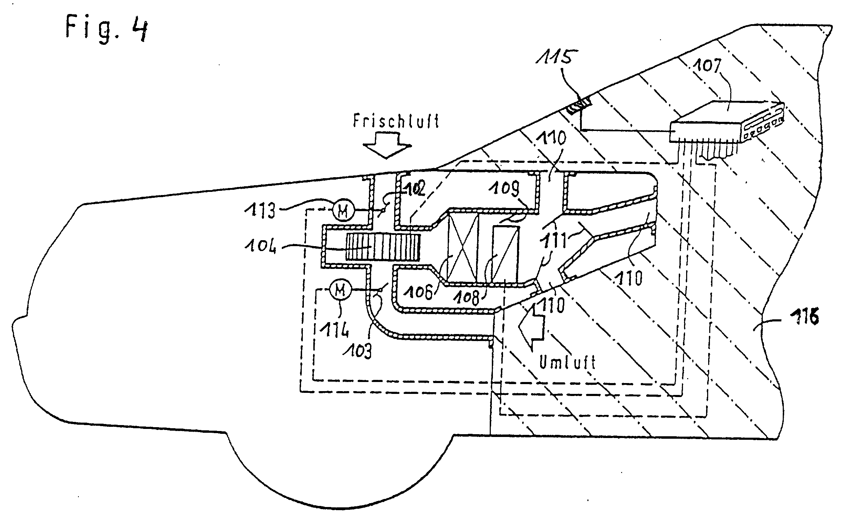

Fig. 4 zeigt ein Ausführungsbeispiel für eine Klima- und Belüftungsanlage eines Kraftfahrzeugs, in der der erfindungsgemäße Feuchtesensor eingesetzt ist. Über die Frischluftklappe 102 wird Frischluft aus der Umgebung des Fahrzeugs in das Kraftfahrzeug selbst angesaugt. Die Stellung der Frischluftklappe 102 von einem Stellmotor 113 in Abhängigkeit von elektrischen Signalen gesteuert, die vom Regel- und Bediengerät 107 ausgegeben werden. Über die Umluftklappe 103, die in Abhängigkeit von elektrischen Signalen des Regel- und Bediengeräts 107 über einen Stellmotor 114 angesteuert wird, kann Luft aus dem Fahrgastraum 116 des Kraftfahrzeugs angesaugt werden. Durch den Ventilator 114 werden Um- und Frischluft in den Fahrgastraum 116 befördert. Auf den Weg in den Fahrgastraum 116 passiert die Luft einen Verdampfer 106 einer Kälteanlage sowie gegebenenfalls - abhängig von der Stellung einer Temperaturklappe 109 - einen Wärmetauscher 108. Im Heizbetrieb wird die Luft durch den Wärmetauscher 108 erwärmt. Über Ausströmer 110 wird die gegebenenfalls gekühlte oder erwärmte Luft dem Fahrgastraum 115 zugeführt. Die Luftverteilung kann hierbei mit Luftverteilerklappen 111 reguliert werden.

Verschiedene Sensoren, insbesondere nicht näher dargestellte Temperatursensoren und der Feuchtesensor 115, liefern Istwerte für die Klimaregelung. Sollwerte können über Bedienelemente eingestellt werden, die am Regel- und Bediengerät 107 angebracht sind.

Der von der kondensierten Feuchtigkeit abhängige Widerstandswert des Feuchtesensors 115 wird von dem Regel- und Bediengerät 107 weiterverarbeitet, indem der Meßwert (Widerstand oder Leitwert) mit einem Vorgabewert verglichen wird. Wird über diesen Vergleich Feuchtigkeit auf der Scheibeninnenseite detektiert, so kann beispielsweise in einer ersten Stufe die Gebläsedrehzahl erhöht werden, so daß vermehrt Frischluft an der Scheibe entlang geführt wird. Als weitere Gegenmaßnahme kann jedoch auch die Klimaanlage eingeschaltet werden, wobei durch die dann dem Fahrzeuginnenraum zugeführte trockenere Luft ein Abtrocknen der Scheibe erzielt wird.

Die Maßnahmen zum Trocknen der Fahrzeugscheibe können auch gestuft erfolgen, wobei beispielsweise verschiedene Grenzwerte für die Einschaltung des Gebläses und der Klimaanlage vorgesehen sind.

## Patentansprüche

1. Anordnung zum Trocknen der einem Fahrzeuginnenraum zugewandten Seite einer Fahrzeugscheibe, insbesondere einer Windschutzscheibe, mit einem auf der dem Innenraum zugewandten Seite der Fahrzeugscheibe angeordneten Feuchtesensor, der als Leiterbahnschicht ausgebildet ist und innig mit der Scheibe verbunden ist, einem Steuergerät, das mit dem Sensor verbunden ist und die Meßwerte des Sensors verarbeitet sowie einer Einrichtung zur Verminderung der auf der dem Fahrzeuginnenraum zugewandten Seite der Fahrzeugscheibe kondensierten Feuchtigkeit, wobei die Einrichtung von dem Steuergerät automatisch aktiviert wird, wenn die von dem Feuchtesensor gemessene Feuchtigkeit einen vorgegebenen Grenzwert überschreitet.

2. Anordnung nach Anspruch 1, **dadurch gekennzeichnet, daß** der Feuchtesensor in Schichttechnik auf die Fahrzeugscheibe aufgebracht ist.

3. Anordnung nach Anspruch 2, **dadurch gekennzeichnet, daß** der Feuchtesensor in Dickschichttechnik auf die Fahrzeugscheibe aufgebracht ist.

4. Anordnung nach einem der vorhergehenden Ansprüche 1 bis 3, **dadurch gekennzeichnet, daß** die Einrichtung zur Verminderung der Feuchtigkeit ein Fahrzeuggebläse ist.

5. Anordnung nach einem der vorhergehenden Ansprüche 1 bis 3, **dadurch gekennzeichnet, daß** die Einrichtung zur Verminderung der Feuchtigkeit eine Fahrzeugklimaanlage ist.

6. Anordnung nach einem der vorhergehenden Ansprüche 1 bis 3, **dadurch gekennzeichnet, daß** die Einrichtung zur Verminderung der Feuchtigkeit eine Scheibenheizung ist.

7. Verfahren zur Herstellung eines Feuchtesensors auf einer dem Innenraum eines Kraftfahrzeugs zuzuwendenden Seite einer Fahrzeugscheibe, **dadurch gekennzeichnet, daß** der Sensor als Leiterbahnschicht während eines Sinterprozesses der Scheibenherstellung auf die Scheibe aufgebracht wird.

8. Verfahren nach Anspruch 7, **dadurch gekennzeichnet, daß** das Aufbringen der Leiterbahnschicht während eines Biegeprozesses der Scheibe erfolgt.

9. Verfahren nach einem der vorhergehenden Ansprüche, **dadurch gekennzeichnet, daß** die Leiterbahnschicht in Dickschichttechnik direkt auf die Scheibe aufgebracht wird.

10. Verfahren nach Anspruch 9, **dadurch gekennzeichnet, daß** die Leiterbahnschicht im Siebdruck aufgebracht wird.

11. Kraftfahrzeugscheibe mit einem auf der dem Innenraum eines Kraftfahrzeugs zugewandten Seite angeordneten Feuchtesensor, der als Leiterbahnschicht auf der dem Innenraum eines Kraftfahrzeugs zugewandten Seite der Scheibe ausgebildet und innig mit der Scheibe verbunden ist.
